# EUROPÄISCHE PATENTANMELDUNG

(11) **EP 3 059 074 A1**
(43) Veröffentlichungstag der Anmeldung: **24.08.2016**
(21) Anmeldenummer: 15155586.9
(22) Anmeldetag: 18.02.2015
(51) Int. Cl.: B29C 67/00, B22F 3/105, G10K 11/34, B33Y 10/00, B33Y 30/00

(54) **Verfahren und Vorrichtung zum Herstellen eines dreidimensionalen Objekts**

(71) Anmelder: Technische Universität München, 80333 München (DE)
(72) Erfinder: Neibecker, Pascal Bruno, 80639 München (DE); Ceeh, Hubert, 81671 München (DE); Weber, Josef Andreas, 81377 München (DE)
(74) Vertreter: Lucke, Andreas

(57) **Zusammenfassung**

Ein Verfahren zum Herstellen eines dreidimensionalen Objekts umfasst das Bereitstellen eines Werkstoffes (18) in einem Werkstoffvolumen (16) und das Ausbilden eines dreidimensionalen Objekts aus dem Werkstoff (18) durch selelctives Bestrahlen des Werkstoffes (18) mit Ultraschall.

## Beschreibung

### Gebiet der Erfindung

Die Erfindung bezieht sich auf ein Verfahren und eine Vorrichtung zum Herstellen eines dreidimensionalen Objekts, insbesondere auf generative bzw. additive Fertigungsverfahren wie 3D-Druck.

### Hintergrund der Erfindung

Generative bzw. additive Fertigungsverfahren, insbesondere 3D-Druckverfahren, haben sich mittlerweile zur schnellen und kostengünstigen Fertigung von Modellen, Mustern, Prototypen, Werkzeugen, aber zunehmend auch von Endprodukten, etabliert. In diesen Verfahren erfolgt die Fertigung direkt auf der Basis rechnerinterner Datenmodelle aus formlosen (Flüssigkeiten, Pulver, usw.) oder formneutralen (z.B. bandförmigen oder drahtförmigen) Ausgangsstoffen mittels chemischer und/oder physikalischer Prozesse.

Beim selektiven Elektronenstrahlschmelzen bzw. selektiven Elektronenstrahlsintern schreibt ein fokussierter Elektronenstrahl auf ein feines Pulver. Das Pulver wird beim Elektronenstrahlschmelzen vollständig, beim Sintern zumindest teilweise aufgeschmolzen. Durch das wiederholte Auftragen von Pulver und Schmelzen bzw. Sintern können dreidimensionale Körper aufgebaut werden, wie dies beispielhaft im US-Patent US 5,597,589 beschrieben ist. Die technischen Anforderungen für eine derartige Anlage sind jedoch allein schon aufgrund der Verwendung eines Elektronenstrahls sehr hoch. Zum einen sind die Optiken zur Strahlfokussierung teuer und sperrig. Zum anderen muss die gesamte Anlage im Vakuum betrieben werden. Zudem erfordert das selektive Elektronenstrahlschmelzen ein schichtweises Aufbringen des Pulvers, wodurch die erreichbare Druckgeschwindigkeit limitiert ist.

Selektives Laserschmelzen ist dem Elektronenstrahlschmelzen ähnlich, wobei jedoch anstelle eines Elektronenstrahls ein Laser (meist ein CO₂-Laser, ein Nd:YAG-Laser oder ein Faserlaser) zum Einsatz kommt. Zwar entfällt gegenüber dem Elektronenstrahlschmelzen die Notwendigkeit, die gesamte Anlage im Vakuum zu betreiben. Die Verwendung eines Schutzgases bleibt dennoch unabdingbar. Auch in diesem Verfahren ist die Druckgeschwindigkeit aufgrund der Notwendigkeit, das Pulver schichtweise aufzubringen, beschränkt.

Bei Schmelzschichtverfahren (englisch "fused deposition modeling") werden Objekte durch schichtweises Auftragen von Kunststoffen erstellt. Dazu wird der Kunststoff aufgeschmolzen und durch einen Extruder gepresst. Um beliebige Formen drucken zu können, ist es unter Umständen nötig, zusätzliche Stützkonstruktionen (sogenannte "supports") zu drucken. Ein Schmelzschichtverfahren ist beispielsweise in der Anmeldeschrift WO 2001/026023 beschrieben. Die Genauigkeit des Drucks ist vornehmlich durch den Durchmesser des Extruders beschränkt. Kommerzielle Modelle bieten Auflösungen im Bereich von nur circa 0,5 mm an, welche für viele industrielle Anwendungen unzureichend sind. Die Druckgeschwindigkeit ist durch die Verfahrgeschwindigkeit der Düse limitiert.

Das sogenannte Multi-Jet Modeling ähnelt dem Tintenstahldruck und erreicht hohe Auflösungen. In einer ersten Variante werden spezielle Harze aufgebracht, die im nächsten Schritt mit einer Ultraviolett-Lichtquelle belichtet werden und aushärten. In einer zweiten Variante wird schichtweise ein Pulver aufgetragen, das mit einem Klebstoff bedruckt wird. So können sowohl Kunststoffe als auch Metalle und Keramiken gedruckt werden. Für die beiden zuletzt genannten Materialien sind aber unter Umständen weitere Fertigungsschritte notwendig, um die gewünschten Materialeigenschaften zu erhalten, beispielsweise ein Tempern, ein Auffüllen der Klebstofflücken usw. Multi-Jet Modeling ist teuer in Anschaffung und Unterhalt und dadurch vornehmlich für industrielle Anwendungen interessant.

Für die Stereolithographie wird - ähnlich wie beim Multi-Jet Modeling - ein flüssiges Kunstharz verwendet, welches unter Lichteinwirkung aushärtet. Dabei wird mittels eines Lasers direkt in den Behälter, in welchem sich das Kunstharz befindet, geschrieben. Durch sukzessives Anheben des Flüssigkeitsspiegels kann ein dreidimensionales Objekt stückweise aufgebaut werden. Ein solches Verfahren ist beispielsweise in der Anmeldeschrift DE 2012 10011418 beschrieben. Die Stereolithographie erreicht eine hohe Auflösung. Sie erfordert jedoch bewegliche Komponenten, wie beispielsweise Wischer zur gleichmäßigen Verteilung des Polymers, welche die Druckgeschwindigkeit herabsetzen.

Vor dem Hintergrund der vorgenannten Probleme besteht Bedarf nach einem verbesserten Verfahren bzw. einer verbesserten Vorrichtung, welche das schnelle und kostengünstige Herstellen dreidimensionaler Objekte, vorzugsweise in beliebiger Formgebung, ermöglichen.

### Zusammenfassung der Erfindung

Diese Aufgabe wird durch das erfindungsgemäße Verfahren gemäß Anspruch 1 bzw. die erfindungsgemäße Vorrichtung gemäß Anspruch 11 gelöst. Die abhängigen Ansprüche beziehen sich auf vorteilhafte Weiterbildungen.

Ein erfindungsgemäßes Verfahren zum Herstellen eines dreidimensionalen Objekts umfasst das Bereitstellen eines Werkstoffes in einem Werkstoffvolumen und das Ausbilden eines dreidimensionalen Objekts aus dem Werkstoff durch selektives Bestrahlen des Werkstoffes mit Ultraschall.

Die Erfinder haben erkannt, dass selektives Bestrahlen des Werkstoffes mit Ultraschall ein Ausbilden dreidimensionaler Objekte unmittelbar aus dem dreidimensionalen Werkstoffvolumen bei hoher Reproduzierbarkeit ermöglicht. Da die Formgebung des dreidimensionalen Objekts durch das selektive Bestrahlen des Werkstoffes mit Ultraschall erreicht wird, sind nahezu beliebige Formen möglich. Zudem kann - im Gegensatz zu herkömmlichen 3D-Druckverfahren - auf bewegliche Bauteile weitgehend verzichtet werden. Dadurch lassen sich hohe Druckgeschwindigkeiten erreichen. Gleichzeitig reduziert der Verzicht auf bewegliche Bauteile die Herstellungskosten und den Wartungsbedarf.

Zudem führt das Bestrahlen mit Ultraschall zu einer im Vergleich zu herkömmlichen Druckverfahren nur geringen thermischen Belastung des Werkstoffes bzw. des dreidimensionalen Objekts, sodass mit einer Vielzahl von Werkstoffen gearbeitet werden kann.

Ein Werkstoff im Sinne der Erfindung kann jeder Werkstoff sein, der geeignet ist, seine Materialeigenschaften und/oder seine Phase unter dem Einfluss der Bestrahlung mit Ultraschall zu ändern, insbesondere unter der Bestrahlung mit Ultraschall aufzuschmelzen. Der Werkstoff wird erfindungsgemäß in einem Werkstoffvolumen bereitgestellt. Als Werkstoffvolumen im Sinne der Erfindung kann jedes Behältnis dienen, welches den Werkstoff vorhält.

Das Ausbilden des dreidimensionalen Objekts aus dem Werkstoff durch selektives Bestrahlen des Werkstoffes mit Ultraschall kann insbesondere in dem Werkstoffvolumen selbst erfolgen. Dadurch entfällt - im Gegensatz zu zahlreichen herkömmlichen 3D-Druckverfahren - das Erfordernis, den Werkstoff bzw. Ausgangsstoff zur Druckzone zu transportieren, sodass die Komplexität der Druckvorrichtung reduziert und die Druckgeschwindigkeit gesteigert werden kann.

In einer bevorzugten Ausführungsform erfolgt das selektive Bestrahlen des Werkstoffes entlang eines vordefinierten Pfades durch den Werkstoff.

Insbesondere kann dabei der Pfad der Struktur des dreidimensionalen Objekts entsprechen.

Die erfindungsgemäße Lösung ermöglicht auf diese Weise ein Ausbilden eines dreidimensionalen Objekts mit nahezu beliebiger vordefinierter Struktur, indem ein Ultraschallstrahl entlang eines der vordefinierten Struktur entsprechenden Pfades durch den Werkstoff gefahren wird.

Vorzugsweise umfasst das selektive Bestrahlen das Fokussieren des Ultraschalls auf mehrere vordefinierte Bereiche des Werkstoffes, insbesondere ein Fokussieren eines Ultraschallstrahls auf einen ersten vordefinierten Bereich des Werkstoffes und anschließend auf einen zweiten vordefinierten Bereich des Werkstoffes.

Durch ein Fokussieren des Ultraschalls lässt sich der Energieeintrag in den Werkstoff zum Ausbilden des dreidimensionalen Objekts gezielt und mit hoher räumlicher und zeitlicher Auflösung steuern. Dabei kann insbesondere der Ultraschallstrahl auf entsprechend einem Bauplan für das dreidimensionale Objekt ausgewählte Bereiche des Werkstoffes fokussiert werden, um dort die Strukturen des dreidimensionalen Objekts auszubilden. Darin liegt ein großer Vorteil gegenüber herkömmlichen 3D-Druckverfahren, welche lediglich einen schichtweisen Aufbau eines dreidimensionalen Objekts ermöglichen.

Das Fokussieren des Ultraschalls auf vordefinierte Bereiche des Werkstoffes kann darüber hinaus schnell und ohne bewegliche Teile erfolgen, sodass sich mit der erfindungsgemäßen Lösung hohe Druckgeschwindigkeiten erreichen lassen.

Das Fokussieren des Ultraschalls kann insbesondere mittels einer Fokussieroptik erfolgen. Die Fokussieroptik kann eine oder mehrere Linsen, beispielsweise Plexiglaslinsen, umfassen.

Alternativ oder zusätzlich kann das Fokussieren des Ultraschalls mittels einer Phasenarray-Ultraschallquelle erfolgen.

Die Phasenarray-Ultraschallquelle kann mehrere Ultraschallelemente, beispielsweise piezoelektrische Transducer, umfassen, welche gegeneinander phasenverzögerte Ultraschallsignale emittieren. Der resultierende Ultraschallstrahl ergibt sich durch Überlagerung dieser Einzelsignale und kann durch geeignete Wahl der Phasenverzögerung schnell und mit hoher Genauigkeit auf beliebige Bereiche des Werkstoffvolumens fokussiert werden.

In einer bevorzugten Ausführungsform umfasst das selektive Bestrahlen des Werkstoffes das Bestrahlen des Werkstoffes mit wenigstens einem ersten Ultraschallstrahl und wenigstens einem zweiten Ultraschallstrahl.

Auf diese Weise können unter Verwendung mehrerer Ultraschallquellen unterschiedliche Bereiche des Werkstoffvolumens gleichzeitig bestrahlt werden und auf diese Weise unterschiedliche Abschnitte des dreidimensionalen Objekts gleichzeitig geformt werden. Die Druckgeschwindigkeit lässt sich dadurch weiter steigern.

In einer bevorzugten Weiterbildung werden der erste Ultraschallstrahl und der zweite Ultraschallstrahl aus unterschiedlichen Raumrichtungen in einen vordefinierten Bereich des Werkstoffes fokussiert.

Dadurch lässt sich durch Kombination des Energieeintrags mehrerer Ultraschallstrahlen die Energiedichte in dem vordefinierten Bereich des Werkstoffes zusätzlich erhöhen. Auch auf diese Weise kann eine Steigerung der Druckgeschwindigkeit erreicht werden.

Das Ausbilden des dreidimensionalen Objekts kann insbesondere das Aufschmelzen des Werkstoffes durch das selektive Bestrahlen des Werkstoffs mit Ultraschall umfassen.

Das dreidimensionale Objekt kann sich in dieser Ausführungsform durch ein Erstarren und ein damit einhergehendes Verbinden des Werkstoffes entlang des vordefinierten Pfades durch den Werkstoff ausformen.

In einer bevorzugten Ausführungsform umfasst der Werkstoff ein Granulat.

Ein Granulat im Sinne der Ausführungsform umfasst jeden körnigen bzw. pulverförmigen Feststoff.

Das Granulat kann insbesondere thermoplastische Polymere, insbesondere Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und/oder Polyvinylchlorid (PVC) umfassen.

Durch Aufschmelzen des Granulats mittels Ultraschall lassen sich gezielt und mit hoher räumlicher Auflösung nahezu beliebige dreidimensionale Strukturen ausbilden.

Der Werkstoff kann ein faserverstärktes Granulat umfassen, insbesondere ein mit Glasfasern und/oder Karbonfasern verstärktes Granulat. Dadurch lässt sich eine besonders feste Struktur erreichen.

In einer Ausführungsform umfasst der Werkstoff eine Metallgranulat und/oder ein Keramikgranulat.

Die Granulatkörner können dabei insbesondere mit einer Polymerschicht überzogen ("gecoatet") sein.

In einer bevorzugten Ausführungsform weist das Granulat eine Granulatgröße von nicht weniger als 25 µm, vorzugsweise nicht weniger als 50 µm, auf.

Vorzugsweise weist das Granulat eine Granulatgröße von nicht mehr als 2mm, insbesondere nicht mehr als 1mm und im Speziellen nicht mehr als 200 µm auf.

Die vorangehenden Unter- bzw. Obergrenzen an die Größe des Granulats können sich insbesondere auf die durchschnittliche Korngröße des Granulats beziehen.

In einer bevorzugten Ausführungsform umfasst der Werkstoff unterschiedliche Granulate.

Insbesondere können diese unterschiedlichen Granulate im Werkstoffvolumen räumlich in unterschiedlichen Mischungsverhältnissen vorliegen. Dies bewirkt eine durch die Werkstoffzusammensetzung bedingte räumliche Variation der mechanischen und physikalischen Eigenschaften.

Insbesondere können Granulate ausgewählt werden, welche durch den eingetragenen Ultraschall miteinander verschmelzen, sich vermischen, reagieren und/oder gemeinsam erstarren. Auf diese Weise können die mechanischen Eigenschaften des dreidimensionalen Objekts variiert werden.

In einer bevorzugten Ausführungsform können Polymergranulate im Werkstoffvolumen mit Glas- oder Kohlefasern vermischt werden, sodass beim Erstarren ein Faserverbundwerkstoff erzeugt wird.

Die Erfindung ist jedoch nicht auf Granulate als Werkstoffe beschränkt.

In einer Ausführungsform umfasst der Werkstoff eine Monomerlösung.

Das Ausbilden des dreidimensionalen Objektes kann insbesondere das Initiieren einer Emulsionspolymerisation und/oder einer Copolymerisation durch das selektive Bestrahlen der Monomerlösung mit Ultraschall umfassen.

Auf diese Weise kann das Monomer, beispielsweise Acrylnitril, durch fokussierten Ultraschall räumlich polymerisiert werden, um gezielt eine dreidimensionale Struktur auszubilden.

Die Verwendung von Granulat und einer Monomerlösung als Werkstoff schließen einander nicht aus. Insbesondere kann als Werkstoff auch eine Monomer-Granulat-Suspension verwendet werden, die durch das Bestrahlen mit Ultraschall punktuell verbunden wird.

In einer Ausführungsform umfasst der Werkstoff eine Keramik und/oder ein Metall.

Das Ausbilden des dreidimensionalen Objekts kann in dieser Ausführungsform insbesondere das Sintern der Keramik und/oder des Metalls durch das selektive Bestrahlen mit Ultraschall umfassen.

In einer bevorzugten Ausführungsform weist der Ultraschall eine Wellenlänge von nicht mehr als 16 mm, vorzugsweise nicht mehr als 8 mm und insbesondere nicht mehr als 2 mm auf. Dies entspricht in Luft Frequenzen von mindestens 20 kHz, mindestens 40 kHz beziehungsweise mindestens 160 kHz.

Die Erfinder haben erkannt, dass sich mit diesen verhältnismäßig niedrigen Frequenzen zuverlässig und reproduzierbar dreidimensionale Objekte aus dem Werkstoff, insbesondere durch Aufschmelzen eines Granulats, ausbilden lassen. Ultraschallsignale in diesem niedrigen Frequenzbereich lassen sich zudem einfach und kostengünstig erzeugen.

In einer bevorzugten Ausführungsform umfasst der Ultraschall eine Wellenlänge von nicht weniger als 10 µm, vorzugsweise nicht weniger als 20 µm und insbesondere nicht weniger als 50 µm. Die angegebenen Wellenlängen entsprechen in Luft Frequenzen von höchstens 30 MHz, höchstens 15 MHz beziehungsweise höchstens 6,5 Mhz.

Die Erfinder haben erkannt, dass sich mit diesen Frequenzen eine hinreichend hohe räumliche Auflösung und ein hinreichender Energieeintrag erreichen lassen.

Insbesondere kann die Erfindung ein Anpassen der Impedanz des Werkstoffs und gegebenenfalls des Werkstoffzwischenraums durch ein Anpassungsmedium, welches insbesondere eine Flüssigkeit und im Speziellen eine organische Flüssigkeit umfassen kann, umfassen.

Durch eine Variation der Intensität des Ultraschalls lassen sich die mechanischen Eigenschaften des dreidimensionalen Objekts variieren.

In einer bevorzugten Ausführungsform umfasst das Ausbilden des dreidimensionalen Objekts das selektive Bestrahlen des Werkstoffes mit Ultraschall einer ersten Frequenz und das selektive Bestrahlen des Werkstoffes mit Ultraschall einer zweiten Frequenz, welche sich von der ersten Frequenz unterscheidet.

Durch gezielte Variation der Frequenzen des Ultraschalls lässt sich die Druckgeschwindigkeit weiter steigern. Beispielsweise kann eine erste Frequenz zur Bildung einer Schmelzzone in dem Granulat eingestrahlt werden und danach eine von der ersten Frequenz verschiedene zweite Frequenz mit höherem Absorptionskoeffizienten zum Erweitern bzw. Flüssighalten der Schmelzzone eingestrahlt werden.

Insbesondere kann das Ausbilden des dreidimensionalen Objektes das Ausbilden einer Kavitationszone in dem Werkstoff durch das selektive Bestrahlen des Werkstoffes mit Ultraschall umfassen.

Auf diese Weise können gezielt nichtlineare Effekte, beispielsweise in der Schmelzzone eines Granulats, ausgenutzt werden. Im aufgeschmolzenen Material ist die Ultraschallabsorptionscharakteristik im Vergleich zur Granulatschüttung verschieden. Insbesondere kann durch das Ausbilden einer Kavitationszone aufgrund der damit verbundenen Erhöhung der Zahl der Freiheitsgrade ein wesentlich höherer Absorptionskoeffizient beziehungsweise Energieeintrag erreicht werden.

In einer bevorzugten Ausführungsform umfasst das Verfahren den zusätzlichen Schritt des Bereitstellens eines Konstruktionselements in dem Werkstoffvolumen, wobei das Konstruktionselement zumindest teilweise an den Werkstoff angrenzt oder von dem Werkstoff umgeben ist und das Ausbilden des dreidimensionalen Objekts ein selektives Verbinden des Werkstoffes mit dem Konstruktionselement umfasst.

Insbesondere kann das selektive Verbinden des Werkstoffes mit dem Konstruktionselement das Bestrahlen des Werkstoffes mit Ultraschall an einer Grenzfläche zwischen dem Werkstoff und dem Konstruktionselement umfassen.

Als Konstruktionselement kann jeder vorgefertigte Körper verwendet werden, welcher geeignet ist, dem dreidimensionalen Objekt Stabilität zu verleihen oder in das dreidimensionale Objekt beim Ausbilden aufgenommen zu werden. Das Konstruktionselement kann insbesondere ein Kunststoffelement oder ein Element eines anderen Ausgangsstoffs, etwa ein Keramikelement oder ein Metallelement umfassen.

Die Verwendung von geeignet geformten, sich von dem Werkstoff unterscheidenden Konstruktionselementen kann ein zeitaufwändiges Ausbilden von großen zusammenhängenden Volumina entbehrlich machen. Dadurch lässt sich die Druckgeschwindigkeit weiter erhöhen.

In den vorangehenden Ausführungsformen wurde das Ausbilden des dreidimensionalen Objekts aus dem Werkstoff durch selektives Bestrahlen mit Ultraschall beschrieben. Zusätzlich kann Ultraschall jedoch auch verwendet werden, um gezielt Material von dem (gedruckten) dreidimensionalen Objekt abzutragen. Das Abtragen von Material von dem dreidimensionalen Objekt kann insbesondere das Auflösen oder Zersetzen von Abschnitten des dreidimensionalen Objekts durch gezieltes Bestrahlen mit Ultraschall umfassen. Aufgrund der Verwendung von Ultraschall muss beim Abtragen des Materials nicht notwendigerweise ein direkter Sichtkontakt zwischen der Ultraschallquelle und dem abzutragenden Abschnitt des Objektes bestehen, sodass auch sehr komplexe Geometrien verwirklicht werden können.

Diese Ausführungsform ermöglicht durch die Kombination des Auftragens und Abtragens eine besonders große Variabilität bei der Herstellung dreidimensionaler Objekte.

Die Erfindung bezieht sich auch auf eine Vorrichtung zum Herstellen eines dreidimensionalen Objekts mit einer Ultraschalleinheit, welche dazu eingerichtet ist, einen in einem Werkstoffvolumen bereitgestellten Werkstoff selektiv mit Ultraschall zu bestrahlen.

Vorzugsweise umfasst die Vorrichtung eine Fokussiereinheit zum Fokussieren des Ultraschalls auf unterschiedliche vordefinierte Bereiche des Werkstoffes.

Die Fokussiereinheit kann mindestens eine Linse, insbesondere mindestens eine akustische Linse, umfassen.

Alternativ oder zusätzlich kann die Ultraschalleinheit bzw. die Fokussiereinheit eine Phasenarray-Ultraschallquelle umfassen.

In einer Weiterbildung umfasst die Ultraschalleinheit mehrere Ultraschallquellen, die in unterschiedlicher räumlicher Orientierung zu dem Werkstoffvolumen angeordnet sind und/oder zum Bereitstellen von Ultraschall unterschiedlicher Frequenzen eingerichtet sind.

In einer Weiterbildung umfasst die Vorrichtung auch das Werkstoffvolumen zum Aufnehmen des Werkstoffes.

Das Werkstoffvolumen kann ein Vorratsbehälter zur Aufnahme des Werkstoffes sein.

In einer Ausführungsform umfasst die Vorrichtung eine Steuerungseinrichtung zum Bereitstellen von Steuerungssignalen zum Fokussieren des mindestens einen Ultraschallstrahls der Ultraschalleinheit auf ausgewählte Bereiche des Werkstoffes entsprechend einem vorbestimmten Pfad, welcher dem herzustellenden dreidimensionalen Objekt entspricht.

Die Steuerungseinrichtung kann insbesondere zum Verarbeiten eines Bauplans des herzustellenden dreidimensionalen Objekts eingerichtet sein und auf Grundlage des Bauplans die entsprechenden Steuerungssignale bereitstellen.

In einer bevorzugten Ausführungsform ist die Vorrichtung zum Ausführen des Verfahrens mit einem oder mehreren der vorgenannten Merkmale eingerichtet.

Die Erfindung bezieht sich auch auf ein Rechnerprogramm und/oder ein Rechnerprogramm-Produkt mit rechnerlesbaren Instruktionen, welche dazu eingerichtet sind, auf einer Rechnereinheit, welche mit einer Vorrichtung mit einem oder mehreren der vorgenannten Merkmale verbunden ist, ein Verfahren mit einem oder mehreren der vorgenannten Merkmale auszuführen.

### Detaillierte Beschreibung bevorzugter Ausführungsformen

Die Merkmale und zahlreichen Vorteile der erfindungsgemäßen Lösung lassen sich am besten anhand einer detaillierten Beschreibung bevorzugter Ausführungsformen unter Bezugnahme auf die Figuren verstehen, in denen:
- Figur 1: schematisch eine Vorrichtung zum Ausbilden eines dreidimensionalen Objekts sowie das entsprechende Verfahren zum Ausbilden des dreidimensionalen Objekts gemäß einer Ausführungsform der Erfindung veranschaulicht;
- Figuren 2a und 2b: schematisch Variationen der Ausführungsform der Fig. 1 mit mehreren Ultraschallquellen zeigen;
- Figur 3: schematisch das Ausbilden eines dreidimensionalen Objekts durch Aufschmelzen eines Granulats entlang eines Konstruktionselements gemäß einer Ausführungsform der Erfindung veranschaulicht;
- Figur 4: schematisch eine Ultraschalleinheit mit Phasenarray-Ultraschallquelle gemäß einer Ausführungsform der Erfindung zeigt; und
- Figur 5: schematisch die Ausbildung eines fokussierten Ultraschallstrahls in einer Phasenarray-Ultraschallquelle veranschaulicht.

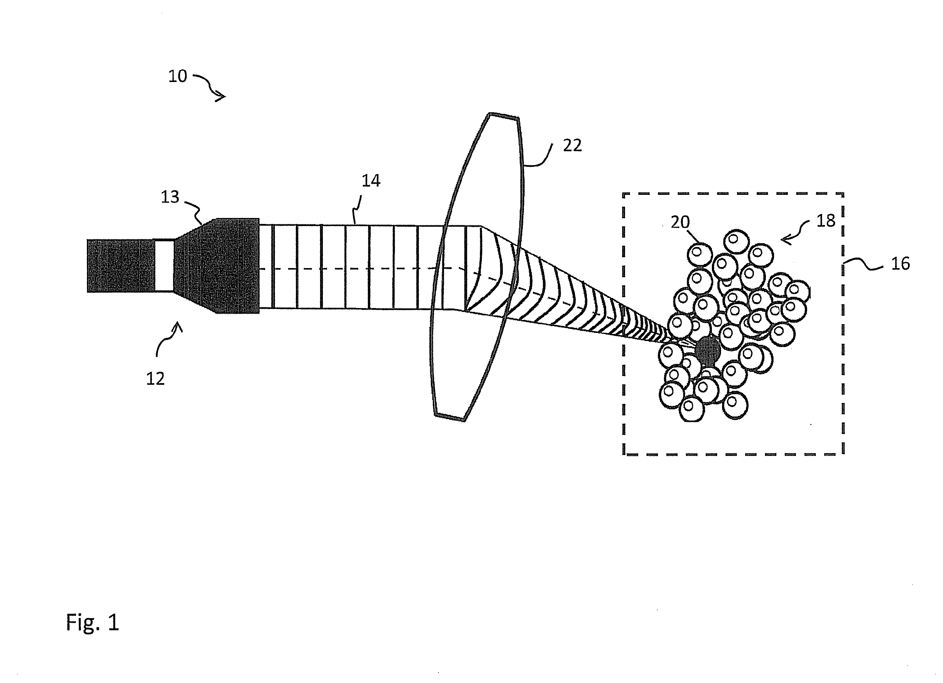

Figur 1 ist eine schematische Darstellung einer Vorrichtung 10 zum Herstellen eines dreidimensionalen Objekts (nicht gezeigt) gemäß einer Ausführungsform der Erfindung. Die Vorrichtung 10 umfasst eine Ultraschalleinheit 12 mit einer Ultraschallquelle 13, welche dazu eingerichtet ist, einen Ultraschallstrahl 14 zu erzeugen und in Richtung auf einen in einem Werkstoffvolumen 16 bereitgestellten Werkstoff 18 auszusenden.

Die Ultraschallquelle 13 kann eine Anordnung bzw. ein Array von piezoelektrischen Ultraschall-Transducern (nicht gezeigt) umfassen, welche dazu eingerichtet sind, ein Ultraschallsignal mit einer Frequenz zwischen 40 und 100 kHz auszusenden. Solche Ultraschallquellen erfordern einen verhältnismäßig geringen apparativen und konstruktiven Aufwand, sind kompakt und kostengünstig in der Herstellung.

Der Werkstoff 18 ist in der Darstellung der Figur 1 eine Granulatschüttung mit einer Vielzahl von Granulatkörnern 20, beispielsweise aus Acrylnitril-Butadien-Styrol (ABS) mit einer durchschnittlichen Korngröße von 50 µm bis 100 µm. Es können jedoch im Rahmen der Erfindung auch Granulate aus anderen Stoffen, beispielsweise Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und/oder Polyvinylchlorid (PVC), verwendet werden.

Die Erfindung ist jedoch nicht auf granulare Werkstoffe 18 beschränkt, sondern kann auch mit flüssigen Werkstoffen, beispielsweise einer Monomerlösung, ausgeführt werden.

Das Werkstoffvolumen 16 ist in der schematischen Darstellung der Figur 1 als gestricheltes Kästchen gezeigt. Es kann beispielsweise als Behälter aus einem für Ultraschall durchlässigen Material ausgebildet sein und das Granulat bzw. die Monomerlösung aufnehmen. Der Behälter kann zusätzlich auch eine Kopplungsschicht, beispielsweise aus einer Flüssigkeit, zum Angleichen der Brechungsindizes aufnehmen.

Figur 1 zeigt darüber hinaus auch eine Fokussiereinheit 22, mit der der Ultraschallstrahl 14 auf unterschiedliche ausgewählte Bereiche des Werkstoffes 18 fokussiert werden kann.

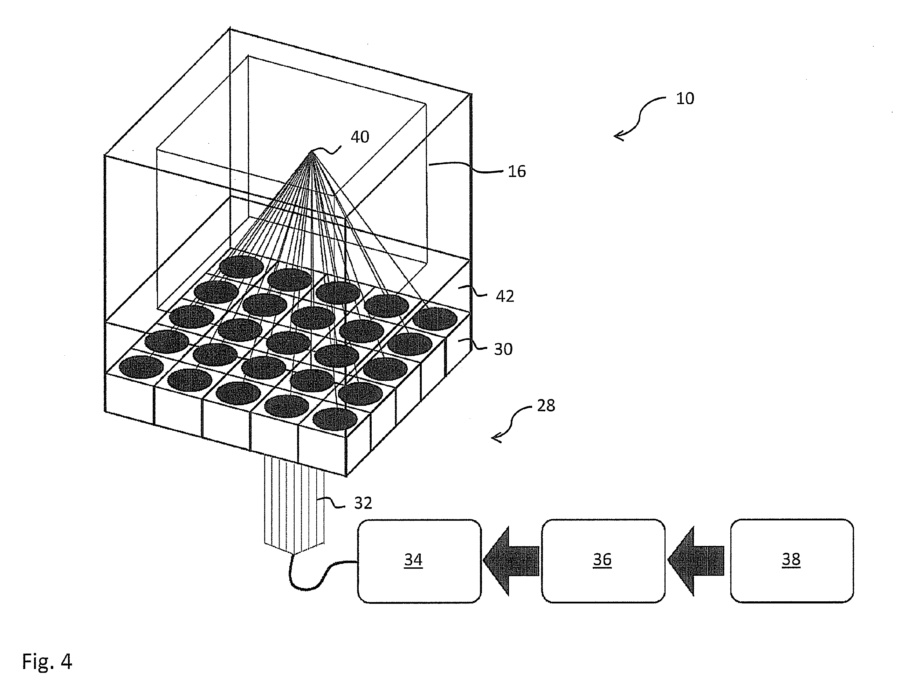

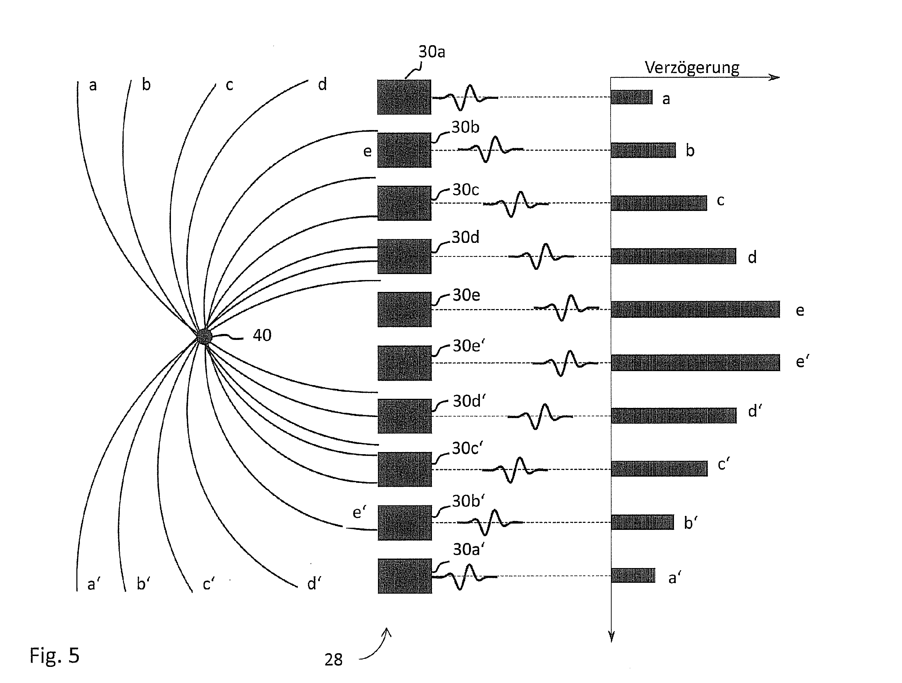

In Figur 1 ist die Fokussiereinheit schematisch als Linse dargestellt. Sie kann insbesondere eine oder mehrere akustische Linsen, beispielsweise Plexiglaslinsen, umfassen. Die Erfindung ist jedoch nicht auf Linsen beschränkt. In einer alternativen Konfiguration, welche nachfolgend unter Bezugnahme auf die Figuren 4 und 5 beschrieben wird, erfolgt das Fokussieren des Ultraschallstrahls 14 auf ausgewählte Bereiche des Werkstoffes 18 mittels einer Phasenarray-Ultraschallquelle.

Das Fokussieren des Ultraschallstrahls 14 erlaubt das selektive und gezielte Einbringen von Energie in ausgewählte Bereiche der losen Granulatschüttung 18. Aufgrund des Energieeintrags des Ultraschallstrahls 14 werden die Granulatkörper 20 am Ort des Energieeintrags aufgeschmolzen und verbinden sich mit benachbarten Granulatkörnern beim nachfolgenden Erstarren zu einer festen Struktur. Die Ultraschallleistung wird dabei hauptsächlich von den Granulatkörnern 20 absorbiert. An der Grenzfläche zur umgebenden Luft wird der Abtransport der Wärme gestört, und die Temperatur im Granulat 18 steigt an. Bei hinreichendem Leistungseintrag wird die Schmelztemperatur überschritten, und die Granulatkörner 20 verschmelzen. Wird der Ultraschallstrahl 14 mittels der Fokussiereinheit 22 entlang eines vordefinierten Pfades durch das Granulat 18 gefahren, bildet sich entlang dieses Pfades durch das Aufschmelzen des Granulats 18 und das nachfolgende Erstarren eine dreidimensionale Struktur, d.h. ein dreidimensionales Objekt, aus.

Das dreidimensionale Objekt kann ein beliebiger dreidimensionaler Körper, beispielsweise ein Prototyp eines Werkstücks oder Werkzeugs, sein. Ein Vorteil der erfindungsgemäßen Lösung liegt darin, dass der Ultraschallstrahl 14 und damit die sich ergebende Schmelzzone entlang beliebiger Pfade dreidimensional durch das Granulat bewegt werden können, sodass sich beim Erstarren beliebige zusammenhängende Strukturen ausbilden lassen.

Die Fokussierung des Ultraschallstrahls 14 ermöglicht einen auf einen sehr kleinen Raumbereich des Werkstoffvolumens 16 beschränkten Energieeintrag und damit das Ausbilden dreidimensionaler Objekte mit hoher Ortsauflösung bzw. feinen Strukturen. Beispielsweise erlaubt ein Leistungseintrag von 10 W in ein Volumen von circa 3 mm³ mit einem Durchmesser von circa 2 mm das Aufschmelzen eines PE-Granulats.

Die schematische Darstellung der Figur 1 zeigt eine Vorrichtung 10 mit einer eine einzige Ultraschallquelle 13 umfassenden Ultraschalleinheit 12. Ausführungsformen der Erfindung können jedoch auch mehrere der Ultraschalleinheit 12 zugeordnete Ultraschallquellen umfassen, welche in unterschiedlichen Orientierungen relativ zu dem Werkstoffvolumen 16 angeordnet sind. Die entsprechenden Ultraschallquellen können Ultraschallstrahlen identischer Frequenz aussenden, sich jedoch auch in ihren entsprechenden Frequenzen unterscheiden.

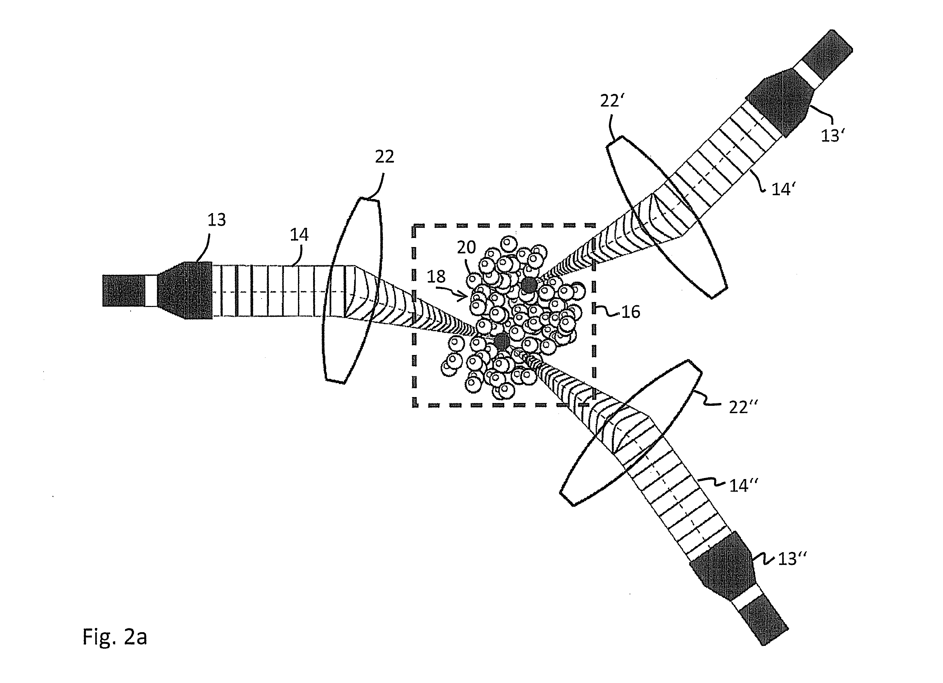

Figur 2a zeigt eine Konfiguration, bei welcher die Ultraschalleinheit 12 drei Ultraschallquellen 13, 13' und 13" umfasst, welche in unterschiedlicher räumlicher Orientierung zum Werkstoff 18 um das Werkstoffvolumen 16 herum angeordnet sind. Jede der Ultraschallquellen 13, 13' und 13" erzeugt einen zugehörigen Ultraschallstrahl 14, 14' beziehungsweise 14", welcher jeweils mittels einer zugehörigen Linse 22, 22' beziehungsweise 22" auf ausgewählte Bereiche innerhalb des Werkstoffvolumens 16 fokussiert wird. Der Aufbau und die Ansteuerung der Ultraschallquellen 13, 13' und 13" beziehungsweise der zugehörigen Linsen 22, 22' und 22" entspricht dabei der vorangehend unter Bezugnahme auf Figur 1 beschriebenen Ausführungsform.

In der Konfiguration der Figur 2a fokussieren die beiden Linsen 22 und 22" die Strahlen 14, 14" auf einen ersten Bereich innerhalb des Werkstoffvolumens 16 und die dritte Linse 22' den Strahl 14' auf einen zweiten Bereich innerhalb des Werkstoffvolumens, welcher von dem ersten Bereich verschieden ist. Auf diese Weise lässt sich an unterschiedlichen Abschnitten des dreidimensionalen Körpers gleichzeitig arbeiten, um dort entsprechende Schmelzzonen auszubilden, wodurch die Herstellungsgeschwindigkeit deutlich erhöht werden kann.

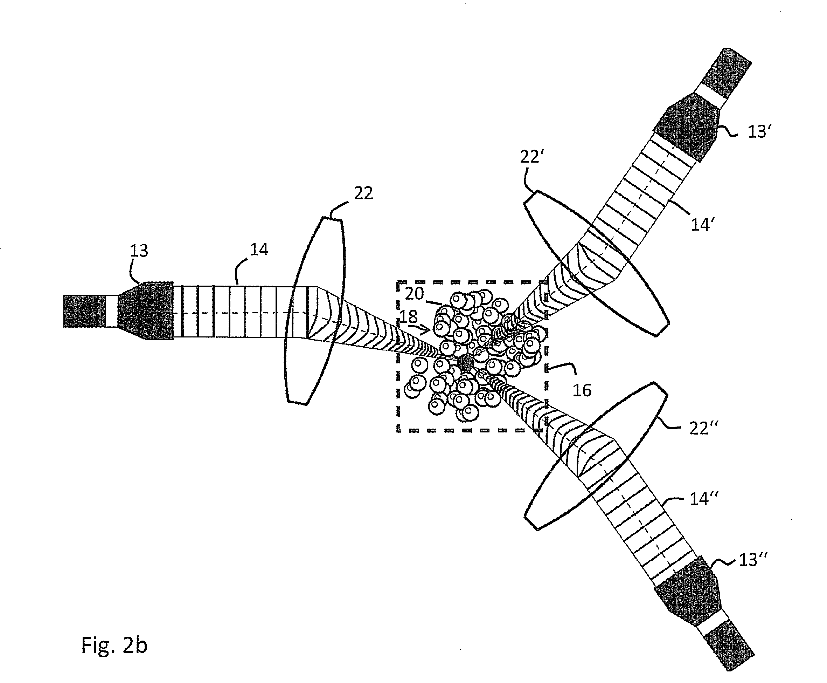

Eine alternative Ausführungsform ist in Figur 2b gezeigt. Sie entspricht in ihrem Aufbau weitgehend der Ausführungsform der Figur 2a. Jedoch fokussieren alle drei Linsen 22, 22' und 22" auf einen gemeinsamen Bereich des Werkstoffvolumens 16, um dort den Energieeintrag lokal zu erhöhen.

Bei Verwendung unterschiedlicher Frequenzen können gezielt nichtlineare Effekte in der Schmelzzone ausgenutzt werden. Das aufgeschmolzene Material unterscheidet sich in seiner Ultraschallabsorptionscharakteristik von der Granulatschüttung. Durch das Ausbilden von Kavitationszonen in der Schmelzzone lässt sich beispielsweise der Absorptionskoeffizient wesentlich erhöhen. Das Bestrahlen des Granulats 18 mit einer ersten Frequenz kann insbesondere zum Ausbilden einer Schmelzzone dienen, während das Bestrahlen mit einer von der ersten Frequenz verschiedenen zweiten Frequenz mit einem höheren Absorptionskoeffizienten zum Erweitern bzw. Flüssighalten der Schmelzzone dient.

Durch Variieren der Intensität des Ultraschalls in unterschiedlichen Bereichen des Werkstoffvolumens 16 lassen sich die mechanischen Eigenschaften des dreidimensionalen Objekts variieren.

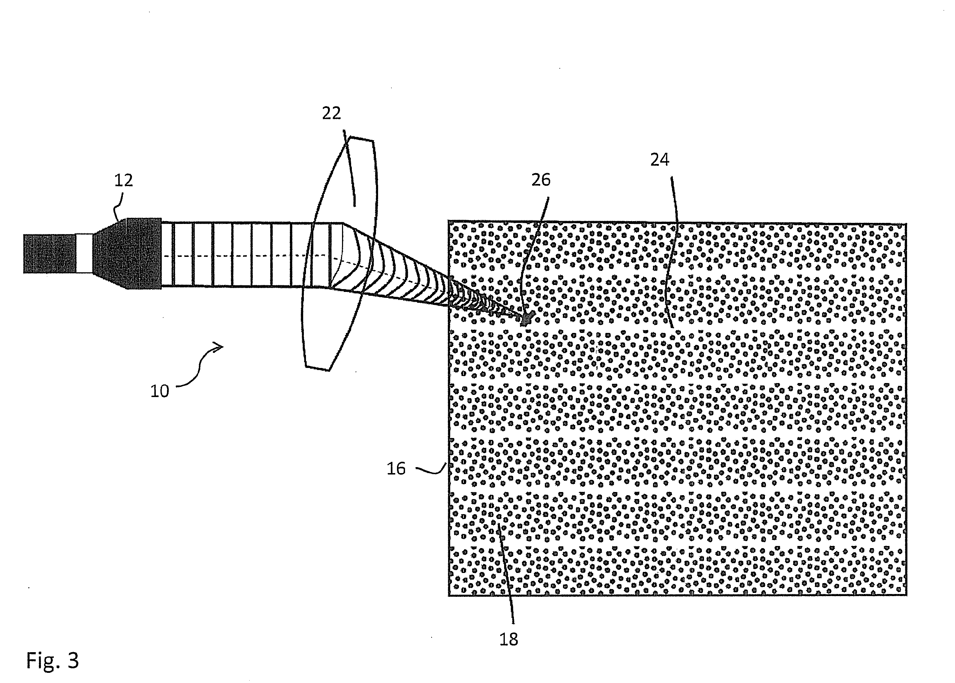

Die in Figur 3 gezeigte Ausführungsform unterscheidet sich von der Ausführungsform der Figur 1 nur darin, dass das Werkstoffvolumen 16 neben dem Werkstoff 18 zusätzliche vorgefertigte Konstruktionselemente 24 umfasst, welche in der Schnittdarstellung der Figur 3 als helle Streifen innerhalb der Granulatschüttung gezeigt sind.

Bei den Konstruktionselementen 24 kann es sich insbesondere um Kunststoffkörper aus einem Kunststoff mit einer höheren Schmelztemperatur als das umgebende Granulat 18 oder um einen Metallkörper handeln. Die Konstruktionselemente 24 können unterschiedlich geformt und an vorbestimmten Positionen in das Werkstoffvolumen 16 eingebracht werden. Figur 2 zeigt eine Konfiguration, bei welcher das Granulat 18 selektiv im Bereich einer Grenzfläche 26 zwischen dem Granulat 18 und dem Konstruktionselement 24 aufgeschmolzen wird, sodass sich das aufgeschmolzene Granulat 18 beim nachfolgenden Erstarren mit dem Konstruktionselement 24 verbindet. Auf diese Weise können gezielt vorgefertigte Konstruktionselemente 24 in das dreidimensionale Objekt aufgenommen werden. Die Verwendung solcher Konstruktionselemente macht das zeitaufwändige Drucken von großen zusammenhängenden Volumina entbehrlich.

Figur 4 zeigt eine Ausführungsform einer erfindungsgemäßen Vorrichtung 10, in welcher der Ultraschallstrahl zum Bestrahlen des Werkstoffs mittels einer Phasenarray-Ultraschallquelle 28 erzeugt wird.

Die Phasenarray-Ultraschallquelle 28 umfasst eine Anordnung beziehungsweise ein Array einer Mehrzahl von Ultraschall-Transducern 30, welche über einen Leistungsbus 32 mit entsprechenden Transducer-Leistungsendstufen 34 verbunden sind. Die Transducer-Leistungsendstufen 34 werden von einer Steuerungseinrichtung 36 angesteuert, welche Steuerungssignale zur Erzeugung von Ultraschallpulsen auf Grundlage eines mittels eines Designprogramms 38 erstellten Bauplans für das dreidimensionale Objekt erzeugt.

Das Prinzip zur Erzeugung eines fokussierten Ultraschallstrahls 14 in der Phasenarray-Ultraschallquelle 28 ist in Figur 5 veranschaulicht.

Figur 5 zeigt eine Phasenarray-Ultraschallquelle 28 mit zehn Ultaraschall-Transducern 30a bis 30e und 30a' bis 30e', welche in einer vorgegebenen räumlichen Konfiguration zueinander angeordnet sind und von der Steuerungseinrichtung 36 über die Leistungsendstufen 34 und den Leistungsbus 32 einzeln angesteuert werden (hier nicht gezeigt), um Ultraschallsignale auszusenden. Wie im rechten Teilbild der Figur 5 schematisch anhand eines Balkendiagramms gezeigt ist, erfolgt die Aussendung der Wellenfronten der Ultraschallsignale untereinander phasenverzögert, wobei jeweils den Paaren 30a/30a', 30b/30b', 30c/30c', 30d/30d' und 30e/30e' die gleiche Phase zugeordnet ist. Durch geeignete Wahl der Phasenverzögerung zwischen diesen Paaren lässt sich eine Fokussierung der von den einzelnen Ultraschall-Transducern 30a bis 30e und 30a' bis 30e' ausgesandten Ultraschallwellen an einem beliebigen Fokussierpunkt 40 erreichen. Die Überlagerung der Einzelwellen im Fokussierpunkt 40 ist schematisch im linken Teilbild der Figur 5 gezeigt.

In der Darstellung der Figur 4 sind die von den Ultraschall-Transducern 30 ausgesandten Ultraschallwellen der übersichtlichen Darstellung halber als Strahlen gezeigt, welche sich im Fokussierpunkt 40 vereinigen. Durch geeignete Wahl der Phasenverzögerung lässt sich der Fokussierpunkt 40 innerhalb des Werkstoffvolumens 16 beliebig und schnell verfahren, um einen gezielten lokalen Energieeintrag und dadurch das Aufschmelzen des Granulats entlang eines vorbestimmten Schmelzpfades zu erreichen. Auch unter Verwendung einer Phasenarray-Ultraschallquelle 28 lässt sich auf diese Weise - ähnlich wie mit der in den Figuren 1 und 2 gezeigten Linse 22, jedoch ohne bewegliche Teile - ein dreidimensionales Objekt entlang eines vorbestimmten Schmelzpfades herstellen.

Das Einkoppeln der Ultraschallsignale von den Ultraschall-Transducern 30 in das Werkstoffvolumen 16 kann durch eine Kopplungsschicht 42 zum Angleichen der Brechungsindizes erleichtert werden.

Figur 4 zeigt eine Konfiguration mit lediglich einer Phasenarray-Ultraschallquelle 28. Ähnlich wie in den unter Bezug auf die Figuren 1 und 2 beschriebenen Ausführungsformen können jedoch um das Werkstoffvolumen bzw. den Behälter 16 herum mehrere Phasenarray-Ultraschallquellen angeordnet werden, um den Energieeintrag lokal zu erhöhen oder unterschiedliche räumliche Bereiche des Werkstoffs 18 gleichzeitig aufschmelzen zu können.

Die Beschreibung der bevorzugten Ausführungsformen und die Figuren dienen allein der Veranschaulichung der Erfindung und der mit der Erfindung erzielten Vorteile, sollen die Erfindung aber nicht beschränken. Der Umfang der Erfindung ergibt sich allein aus den nachfolgenden Ansprüchen.

### Bezugszeichen

- 10: Vorrichtung zum Herstellen eines dreidimensionalen Objekts
- 12: Ultraschalleinheit
- 13, 13', 13": Ultraschallquellen
- 14, 14', 14": Ultraschallstrahlen
- 16: Werkstoffvolumen, Behälter
- 18: Werkstoff, Granulat
- 20: Granulatkörner
- 22, 22', 22": Fokussiereinheit, Linse
- 24: Konstruktionselement
- 26: Grenzfläche zwischen Granulat 18 und Stützelement 24
- 28: Phasenarray-Ultraschallquelle
- 30: Ultraschall-Transducer der Phasenarray-Ultraschallquelle 28
- 30a - 30e, 30a' - 30e': Ultraschall-Transducer der Phasenarray-Ultraschallquelle 28
- 32: Leistungsbus der Phasenarray-Ultraschallquelle 28
- 34: Leistungsendstufen der Phasenarray-Ultraschallquelle 28
- 36: Steuerungseinrichtung der Phasenarray-Ultraschallquelle 28
- 38: Designprogramm
- 40: Fokussierpunkt
- 42: Kopplungsschicht

## Patentansprüche

1. Verfahren zum Herstellen eines dreidimensionalen Objekts mit folgenden Schritten:
Bereitstellen eines Werkstoffes (18) in einem Werkstoffvolumen (16); und
Ausbilden eines dreidimensionalen Objekts aus dem Werkstoff (18) durch selektives Bestrahlen des Werkstoffes (18) mit Ultraschall.

2. Verfahren nach Anspruch 1, wobei das selektive Bestrahlen des Werkstoffes (18) entlang eines vordefinierten Pfades durch den Werkstoff (18) erfolgt, wobei der Pfad der Struktur des dreidimensionalen Objekts entspricht.

3. Verfahren nach Anspruch 1 oder 2, bei welchem das selektive Bestrahlen das Fokussieren des Ultraschalls auf mehrere vordefinierte Bereiche (40; 26) des Werkstoffes (18) umfasst.

4. Verfahren nach einem der vorangehenden Ansprüche, bei welchem das selektive Bestrahlen des Werkstoffes (18) das Fokussieren des Ultraschalls mittels einer Fokussieroptik (22) und/oder mittels einer Phasenarray-Ultraschallquelle (28) umfasst.

5. Verfahren nach einem der vorangehenden Ansprüche, bei welchem das selektive Bestrahlen des Werkstoffes (18) das Bestrahlen des Werkstoffes (18) mit wenigstens einem ersten Ultraschallstrahl und wenigstens einem zweiten Ultraschallstrahl umfasst, wobei vorzugsweise der erste Ultraschallstrahl und der zweite Ultraschallstrahl aus unterschiedlichen Raumrichtungen in einen vordefinierten Bereich (40; 26) des Werkstoffes (18) fokussiert werden.

6. Verfahren nach einem der vorangehenden Ansprüche, bei welchem der Werkstoff ein Granulat (18) umfasst, vorzugsweise ein thermoplastisches Polymer, insbesondere Acrylnitril-Butadien-Styrol (ABS), Polyamid (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und/oder Polyvinylchlorid (PVC), umfasst.

7. Verfahren nach einem der vorangehenden Ansprüche, bei welchem das Ausbilden des dreidimensionalen Objekts das Aufschmelzen des Werkstoffes (18) durch das selektive Bestrahlen des Werkstoffs (18) mit Ultraschall umfasst.

8. Verfahren nach einem der vorangehen Ansprüche, bei welchem das Ausbilden des dreidimensionalen Objekts das selektive Bestrahlen des Werkstoffes (18) mit Ultraschall einer ersten Frequenz und das selektive Bestrahlen des Werkstoffes (18) mit Ultraschall einer zweiten Frequenz, welche sich von der ersten Frequenz unterscheidet, umfasst.

9. Verfahren nach einem der vorangehen Ansprüche mit dem zusätzlichen Schritt des Bereitstellens eines Konstruktionselements (24) in dem Werkstoffvolumen (16), wobei das Konstruktionselement (24) zumindest teilweise an den Werkstoff (18) angrenzt und das Ausbilden des dreidimensionalen Objekts ein selektives Verbinden des Werkstoffes (18) mit dem Konstruktionselement (24) umfasst.

10. Verfahren nach einem der vorangehenden Ansprüche mit dem zusätzlichen Schritt des Abtragens von Material von dem dreidimensionalen Objekt durch selektives Bestrahlen des dreidimensionalen Objekts mit Ultraschall.

11. Vorrichtung (10) zum Herstellen eines dreidimensionalen Objekts mit:
einer Ultraschalleinheit (12), welche dazu eingerichtet ist, einen in einem Werkstoffvolumen (16) bereitgestellten Werkstoff (18) selektiv mit Ultraschall zu bestrahlen.

12. Vorrichtung (10) nach Anspruch 11 mit einer Fokussiereinheit (22) zum Fokussieren des Ultraschalls auf unterschiedliche vordefinierte Bereiche (40; 26) des Werkstoffes (18), wobei die Fokussiereinheit vorzugsweise mindestens eine Linse (22) oder eine Phasenarray-Ultraschallquelle (28) umfasst.

13. Vorrichtung (10) nach Anspruch 11 oder 12, wobei die Ultraschalleinheit (12) mehrere Ultraschallquellen umfasst, die in unterschiedlicher räumlicher Orientierung zu dem Werkstoffvolumen (16) angeordnet sind und/oder zum Bereitstellen von Ultraschall unterschiedlicher Frequenzen eingerichtet sind.

14. Vorrichtung (10) nach einem der Ansprüche 11 bis 13, umfassend das Werkstoffvolumen, insbesondere einen Behälter (16), zum Aufnehmen des Werkstoffes (18).

15. Rechnerprogramm mit rechnerlesbaren Instruktionen, welche dazu eingerichtet sind, auf einer Rechnereinheit, welche mit einer Vorrichtung (10) nach einem der Ansprüche 11 bis 14 verbunden ist, ein Verfahren nach einem der Ansprüche 1 bis 10 auszuführen.
